# EUROPEAN PATENT SPECIFICATION

(11) **EP 3 448 141 B1**
(45) Date of publication and mention of the grant of the patent: **26.02.2020**
(21) Application number: 17732606.3
(22) Date of filing: 26.04.2017
(51) Int. Cl.: A01B 29/04

(54) **ROLLER SEGMENT. ROLLER WHEEL ROLLER AND AGRICULTURAL IMPLEMENT COMPRISING SUCH A ROLLER**
WALZENSEGMENTWALZENRADWALZE UND LANDWIRTSCHAFTLICHES ARBEITSGERÄT MIT SOLCH EINER WALZE
SEGMENT DE ROULEAU, ROUE À ROULEAU ET OUTIL AGRICOLE COMPRENANT UN TEL ROULEAU

(30) Priority: 29.04.2016 SE 1650577
(43) Date of publication of application: 06.03.2019
(73) Proprietor: Väderstad Holding AB, 590 21 Väderstad (SE)
(72) Inventor: SKOGLUND, Nils-Åke, 592 41 Vadstena (SE); PETTERSSON, Jesper, 591 36 Motala (SE); KARLSSON, Johan, 590 76 Vreta Kloster (SE)
(74) Representative: AWA Sweden AB
(86) International application number: PCT/SE2017/050409
(87) International publication number: WO 2017/188885

(56) References cited:
- EP-A2- 0 598 311
- DE-U1-202013 009 670

## Description

### Technical Field

This document relates to an improved concept for forming a roller for an agricultural implement and an agricultural implement comprising such a roller. The document specifically relates to so-called "packer rollers", i.e. rollers comprising a plurality of roller wheels, each having a ground-contacting portion formed from one or more parts of curved strip-shaped material.

### Background

Rollers are used in agriculture to compress soil and/or to fully or partly support equipment, such as cultivators or seed drills.

Packer rollers are known from, for example, DE202013009670U1, EP0598311 A2, SE1051141A1, EP2502476A1 and WO98/57530A2, and are generally used on lighter soils and for lighter machines.

One advantage of the packer roller is that it can be made to be substantially self-washing, i.e. any soil and mud that gets stuck in or on the roller is continuously removed by the roller segments springing inward in the direction of the roller axle while the roller is driven over the ground surface.

The roller is subjected to relatively great wear and tear, for example when hitting stones or from unevenness of the ground surface. Therefore, it is desirable to be able to renew broken parts of the roller in an easy way in field conditions. In addition, it is desirable to be able to manufacture and install the roller in a cost-efficient way.

Consequently, there is a need for an improved roller.

### Summary

One general object is therefore to provide an improved roller. A particular object is to provide a roller that can be manufactured in a cost-efficient way and is easy to repair.

The invention is defined by the attached independent claims. Embodiments are set forth in the dependent claims, in the description that follows and in the accompanying drawings.

According to a first aspect, a roller segment for forming a roller wheel rotatable about an axis of rotation for an agricultural implement is provided, comprising: a central portion, which is adapted for attaching to an axle, a first radial portion, which extends radially outward from a first end of the central portion, and a curved outer portion, which extends from a radially outer portion of the first radial portion. The roller segment further comprises a second radial portion, which extends radially outward from a second end of the central portion. The first radial portion has a first coupling part and the second radial portion has a second coupling part, which is located at the same radial distance from the outer portion as the first coupling part.

"Central portion" means the portion of the roller segment which is intended to be located nearest a center of rotation of the roller segment.

"Radial portion" means portions of the roller segment which extend substantially parallel to a radius of the roller wheel to be formed. Here, "substantially" means that it extends +/- 10°, preferably +/- 5° or +/- 1° parallel to such a radius.

"Outer portion" means the portion of the roller segment which is intended to be in contact with the ground, i.e. to be part of the roller wheel roller surface. Consequently, the outer portion typically comprises a portion which has a constant radius of curvature that corresponds to a radius of the roller wheel.

The radial extents of the first and second radial portions and of the outer portion arise when the segment is fitted to the axle.

By way of the coupling parts of the radial portions being at the same radial distance from the outer portion, it is possible to connect the radial portions with each other without any intermediate parts. Therefore, the roller wheel can be formed using fewer components and be arranged on an axle without the need for the axle to have special mounting ears for fitting roller segments.

The outer portion and the central portion can extend substantially concentrically to each other, and wherein the outer portion can be longer than the central portion. For example, from the outer portion an inward facing normal to a surface can have a constant distance to the central portion over at least 70% of the length of the outer portion. To put it another way, the tangents at each point of intersection between a radius from the center of the roller wheel and the outer portion and the central portion, can be substantially parallel to each other, i.e. +/- 10°, preferably +/- 5° or +/-1° in parallel.

Viewed in a cross section across the axis of rotation, the central portion can be curved or straight. For example, the central portion can have a cross section which in its form substantially follows an outer form of the axle to which the roller wheel is to be fitted. It is possible, for example, to provide the central portion with a radius of curvature that corresponds to 90-110% of a radius of curvature of the outer surface of the axle.

The roller segment can further comprise a third radial portion, which extends radially inward from the free end of the outer portion to a free end of the second radial portion.

A radially inner portion of the third radial portion, viewed in a radial direction, can overlap a radially outer portion of the second radial portion.

The third radial portion can be moveable in a radial direction relative to the second radial portion. For example, there can be a gap between the second and third radial portions, which in a radial direction amounts to less than 20%, preferably less than 10% or less than 5%, of the radius of curvature of the outer portion. Consequently, the outer portion is allowed to spring inward to a limited extent.

One of the radially inner portion of the third radial portion and the radially outer portion of the second radial portion, viewed in an axial direction, can at least partly surround the second of the radially inner portion of the third radial portion and the radially outer portion of the second radial portion.

Consequently, the risk of a permanent axial deflection of the outer portion can be reduced.
The outer portion of the roller segment, viewed in a radial direction, can substantially overlap the central portion.

A radial overlap can be seen to exist when a normal to a surface of the central portion radial outer surface coincides with a normal to a surface of the outer portion radial inner surface.

"Substantially overlap" means that the radial overlap of the outer portion and the central portion amounts to at least 80%, preferably at least 90%, at least 95% at least 99% or 100%.

Alternatively, radial overlap can be substantially absent between the outer portion and the central portion.

"Substantially absent" means that less than 20%, preferably less than 10%, less than 5%, less than 1% or 0% of the surfaces overlap each other viewed in a radial direction.

The coupling parts can comprise at least a respective recess, slot or through-hole, in which fastening elements are insertable.

The central portion, first radial portion, outer portion and second radial portion of the roller segment are formed in one piece from material which is substantially strip-shaped, preferably steel.

The material can have a mainly rectangular cross section, with the largest side being parallel to an axial direction.

At least a part of the strip-shaped material, preferably the part that forms the outer portion, can have a cross-sectional profile which is non-rectangular, and which is preferably chosen from a group consisting of rectangular, V-shaped, radially outwardly convex and radially outwardly concave.

The central portion can comprise a third coupling part. Such a third coupling part can enable locking of the roller segment relative to an axle or a hub, on which the roller segment is fitted.

The radial portions can have an angle of 360°/N +/- 10%, preferably +/-5% or +/- 1%, relative to each other, where N is an integer in the range [2..6].

According to a second aspect, a roller wheel for an agricultural implement, formed by at least two roller segments as described above, is provided, wherein a first of the second coupling part of the roller segments is connected to a second of the first coupling part of the roller segments.

Such a connection can be direct, i.e. without any intermediate elements. Some form of intermediate element can possibly be present, such as a washer, a spring element or similar, which is separate from, i.e. not attached to, an axle on which the roller wheel can be arranged. The connection can specifically be made without any form of intermediate element that is connected to the axle.

Roller wheels can comprise two, three, four, five or six roller segments, which are connected, second coupling part to first coupling part.

The roller wheel can be formed so that the outer portion of each roller segment substantially overlaps, viewed in a radial direction, the central portion of the same roller segment.

Alternatively, the roller wheel can be formed so that a first of the roller segment outer portion substantially overlaps, viewed in a radial direction, a second roller segment central portion.

Such a roller wheel can further comprise a radial stop, which protrudes from the first radial portion, so that the outer portion radial incurvation is limited.

According to a third aspect, a roller for an agricultural implement, comprising an axle and at least two roller wheels as described above is provided, which are attached to axially separated portions of the axle.

The roller wheels can be attached to the axle by friction provided by said connection of the first and second coupling parts.

For example, the attachment to the axle can be provided by only using such friction coupling.

The roller can further comprise at least a form lock, which can be arranged to prevent rotation of the roller wheel relative to the axle.

Such a form lock can be provided in the form of a bar or similar on the axle, or by using the third coupling part in the central portion.

According to a fourth aspect, an agricultural implement for tillage is provided, which comprises a roller as described above.

According to a fifth aspect, a method for forming a roller wheel is provided, which comprises providing at least two roller segments as described above, positioning the roller segments with respective central portion against an axle, positioning the roller segments so that a first of the second radial portion of the roller segments extends parallel to, and contacts, a second of the first radial portion of the roller segments, and connecting a second coupling part associated with the second radial portion of the first roller segment to a first coupling part associated with the first radial portion of the second roller segment.

The method can comprise each roller segment outer portion being arranged so that it overlaps the central portion of the same roller segment.

Alternatively, the method can comprise each roller segment outer portion being arranged so that it overlaps the central portion of another roller segment.

### Brief description of the drawings

Fig 1 shows a perspective view of a roller segment.
Fig 2 shows a perspective view of a roller wheel, which is formed by four roller segments according to Fig 1.
Fig 3 shows a perspective view of a roller, which is formed by 14 roller wheels according to Fig 2.
Fig 4 shows an agricultural implement in the form of a cultivator, comprising a roller according to Fig 3.
Fig 5 shows a roller wheel according to an alternative embodiment.
Fig 6 shows a roller segment according to the embodiment in Fig 5.

### Detailed description

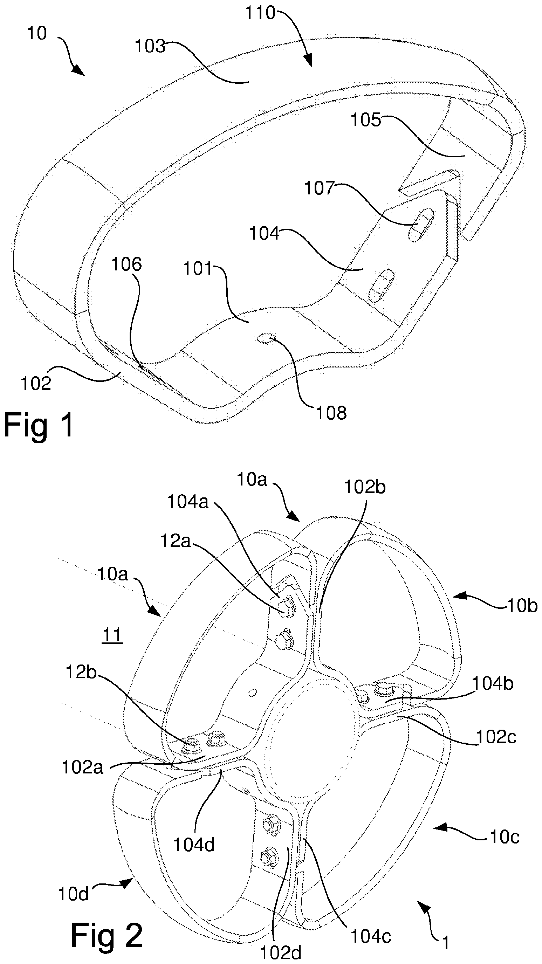

With reference to Fig 1, a roller segment 10 is shown, which is designed, together with a further three roller segments of the same kind, to form a roller wheel 1 as shown in Fig 2.

The roller segment 10 is formed from a strip-shaped material, which can be metal, such as steel. In the example shown, the strip-shaped material has a substantially rectangular cross section. Such a strip-shaped material can have a ratio between width and thickness amounting to 5:1-15:1, preferably 7:1-10:1. Manufacturing the roller segment is thus substantially made through bending such strip-shaped material.

The roller segment 10 comprises a central portion 101, which is a portion designed to be situated nearest the axis of rotation of the roller wheel 1 when this is formed.

The central portion 101, as is shown in Fig 1, can be designed to connect to the form of an axle 11 (Fig 2) on which the roller wheel is to be fitted. In the example shown in Fig 1, the central portion 101 is concave inward, for example with a radius of curvature that corresponds to 80-120% of an outer radius of the axle 11.

The central portion can, but does not have to, be provided with a coupling part 108, for example in the form of a through-hole, slot, recess or other detail which allows form-dependent engagement with the axle 11.

The coupling part 108 can preferably be a positioning aid, arranged to facilitate positioning of the roller segment relative to the axle.

For example, a bolt, plug or similar can be inserted in the coupling part 108 and furthermore in engagement with the corresponding hole in the axle, in order to at least temporarily retain the roller segment while connection is made using other coupling parts 106, 107, so that the central portions are fixed relative to the axle fully or mainly force-dependent.

The coupling part 108 can thus be replaced by a recess, a protrusion, a ridge, a groove or similar, which can interact in a form-dependent manner that corresponds to the coupling part on the axle in order to facilitate positioning.

From a first end of the central portion 101 (viewed in the longitudinal direction of the strip-shaped material) a first radial portion 102 extends, i.e. a portion which is designed to extend substantially radially outward from the center of the roller wheel 1, when this is formed.

The first radial portion 102 can be provided with one or more coupling parts 106, which can have the form of through-holes, slots or other details which allow form-dependent engagement with adjacent roller segments or with fastening elements, such as a screw, bolt or similar.

The first radial portion 102 can be substantially straight, apart from its transition to the central portion 101.

From the distal, or radially outer, end of the first radial portion 102, a substantially curved outer portion 103 extends, which, facing away from the main surface 110 of the central portion, forms a roller surface for contact with soil which the roller is intended to act upon.

The outer portion 103 can be curved with a substantially constant radius of curvature, apart from its transition to the first radial portion 102.

From a second end of the central portion 101, a second radial portion 104 extends. This second radial portion 104 can also be a portion which is designed to extend substantially radially outward from the center of the roller wheel 1 when this is formed.

The second radial portion 104 can be substantially straight, apart from its transition to the central portion 101.

The second radial portion 104 can be provided with one or more coupling parts 107, which can have the form of through-holes, slots or other details which allow form-dependent engagement with adjacent roller segments or with fastening elements, such as a screw, bolt or similar, and in particular with corresponding coupling parts 106 of a first radial portion 102 which is part of an adjacent identical roller segment.

The second radial portion 104 can have a free distal end, viewed from the central portion 101. This end can be substantially straight, curved (e.g. convex or concave) or, as shown in Fig 1, tapered.

A third radial portion 105 can be formed as a radially inwardly curved free end of the outer portion 103. The third radial portion 105 can be designed so that it at least partly overlaps the second radial portion 104, viewed in a radial direction. For example, the third radial portion 105 can be designed as a split tongue, whose tips are on respective axial sides of a tip which is formed by the tapering free end of the second radial portion 104.

The free end of the second radial portion 104 and the free end of the third radial portion can thus be moveable in relation to each other. For example, this can be utilized to allow the free end of the third radial portion to spring radially inward to the second radial portion, wherein the second radial portion can act as a stop for the spring motion and therefore reduce the risk of permanent deformation of the outer portion 103.

Furthermore, the radial overlap between the free ends of the second and third radial portions can reduce the risk of the outer portion bending in the axial direction, out of its plane.

The first radial portion 102 can have a radial extent that corresponds to approximately 40-80% of the radius of curvature of the outer portion, preferably approximately 50-70% of the radius of curvature of the outer portion.

The second radial portion 104 can have a radial extent that corresponds to approximately 20-50% of the radius of curvature of the outer portion, preferably approximately 30-40% of the radius of curvature of the outer portion.

The third radial portion 105 can have a radial extent that corresponds to approximately 10-40% of the radius of curvature of the outer portion, preferably approximately 20-30% of the radius of curvature of the outer portion.

The sum of the radial extent of the second and third radial portions 104, 105, with regard to the radial gap between them and any overlap, can be substantially the same as the radial extent of the first radial portion 102.

By means of roller segment 10, as described above, a roller wheel 1 can thus be formed as shown in Fig 2.

The roller wheel 1 is obtained according to the method shown using four identical roller segments 10a, 10b, 10c, 10d, which, in the example shown, are joined together using fastening elements, here shown in the form of bolt-nut joints 12a, 12b, possibly with washers at the bolt head and/or nut, where such a joint connects a second radial portion 104a of a first roller segment 10a to a first radial portion 102b of a second roller segment 10b. Furthermore, the second radial portion 104b of the second roller segment is connected to the first radial portion 102c of the third roller segment 10c, and the second radial portion 104c of the third roller segment is connected to the first radial portion 102d of the fourth roller segment. Finally, the second radial portion 104b of the fourth roller segment is connected to the first radial portion 102a of the first roller segment.

Each joint can comprise one, two or more sets of fastening elements.

The roller segments 10a-10d can be designed so that when they are joined together, their central portions 101 together form such a shape that attachment to the axle 11 can be provided through press fitting when tightening the joints 12a, 12b.

Such a press fitting can possibly be complemented with, or replaced by, form-dependent attachment to the axle 11, for example using a bolt arranged in the coupling part 108 of the central portion 101 and screwed inward to and/or into the axle.

Furthermore, press fitting can be complemented with a further arrangement to prevent the roller wheel from rotating in relation to the axle. For example, some kind of protrusion can be arranged on the axle, e.g. one or more bars running in the longitudinal direction of the axle.

It will be appreciated that roller wheels according to this principle can be obtained using an arbitrary number of roller segments, e.g. 2, 3, 4, 5 or 6 segments, whose first and second radial portions 102, 104 in the various cases should have central angles relative to each other amounting to approximately 180°, 120°, 90°, 72° and 60° respectively.

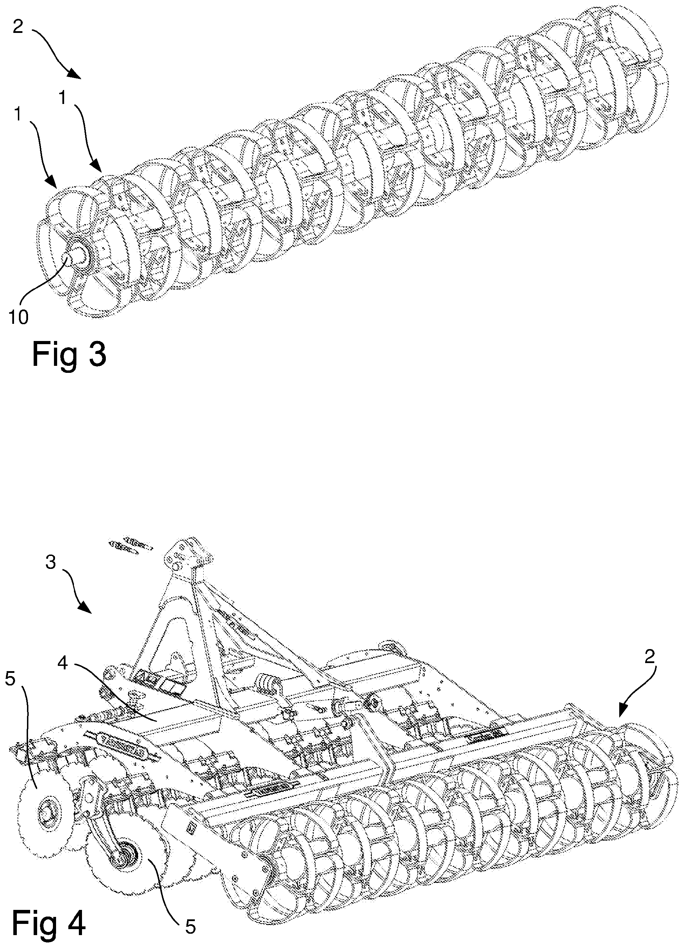

As shown in Fig 3, a roller 2 can be formed by positioning a number of identical roller wheels 1 in a line along an axle 10. The roller wheels can be spaced apart in the range of 30-300% of the axial width of each roller wheel, preferably in the range of 100-200% of the axial width of each roller wheel.

Furthermore, roller wheels 1 can thus be positioned with different angular positions around the axle 10. For example, a pair of adjacent roller wheels can be rotated relative to each other with an angle amounting to 360°/2N +/- 25 %, preferably +/- 10%, where N is the number of roller segments 10 which make up each roller wheel 1.

As shown in Fig 4, an agricultural implement 3 which is adapted to be drawn behind a tractor vehicle, such as a tractor (not shown), can be provided with a roller 2 as described above. Such an agricultural implement 3 can comprise a frame 4 and a plurality of different ground-engaging tools 5, e.g. which can have the form of harrow pins, cultivator pins, levellers, disk tools, furrow openers, sowing disks or similar.

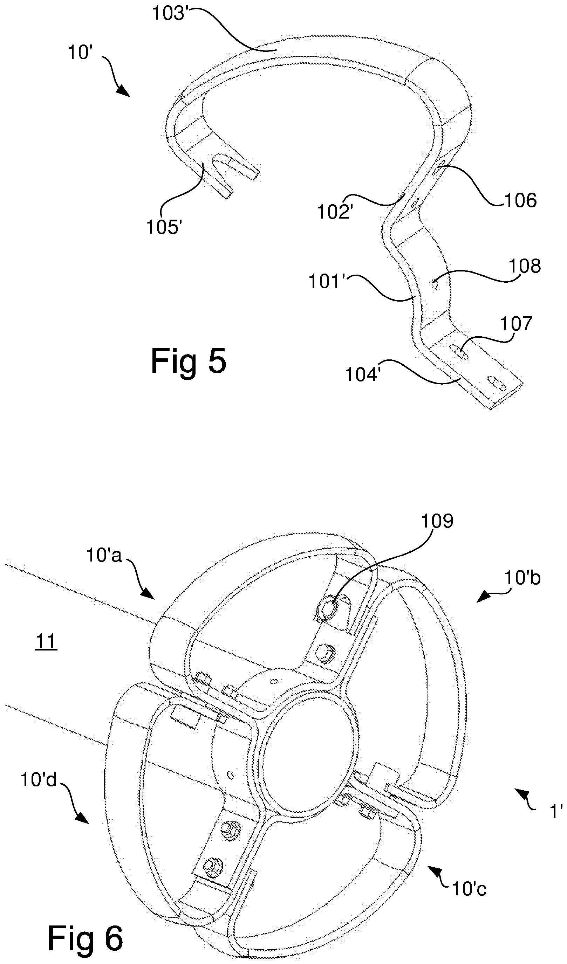

Figs 5 and 6 show an alternative design of a roller segment 10' and a roller wheel 1', respectively.

Roller segment 10' has substantially the same parts as the roller segment shown in Fig 1, i.e. a central portion 101' which can be designed to connect to the form of an axle 11 (Fig 6), to which the roller wheel is to be mounted. In the example shown in Fig 5, the central portion 101' is concave inward, for example with a radius of curvature that corresponds to 80-120% of an outer radius of the axle 11.

The central portion 101' can, but does not have to, be provided with a coupling part 108, for example in the form of a through-hole, slot, recess or other detail which allows form-dependent engagement with the axle 11.

The central portion 101' has, just like the one shown in Fig 2, an extent along a circumferential direction of the axle 11, which extent can be greater than an axial width of the central portion 101'.

At one end of the central portion 101' the latter transitions into a first radial portion 102', which extends substantially radially outward from the end of the central portion 101'. The transition can be achieved with a radius of curvature amounting to approximately 5%-15% of the radius of curvature of the central portion.

At the radially outer portion of the first radial portion 102' the latter transitions into an outer portion 103'.

The outer portion 103' can be curved with a substantially constant radius of curvature, apart from its transition to the first radial portion 102'.

While the roller segment 101 described in Figs 1-2 has overlap between the central portion and the outer portion, viewed in a radial direction, the roller segment shown in Figs 5-6 has no overlap whatsoever.

From a second end of the central portion 101', a second radial portion 104' extends. This second radial portion 104' can also be a portion which is designed to extend substantially radially outward from the center of the roller wheel 1' when this is formed.

The second radial portion 104' can be substantially straight, apart from its transition to the central portion 101'.

The first and second radial portions 102', 104' can have coupling parts 106, 108 in the same way as described with reference to Figs 1-2.

At the second end of the outer portion 103' the latter transitions into a third radial portion 105'. This third radial portion 105' can be formed as a radially inwardly curved free end of the outer portion 103'. Just like the third radial portion 105 shown in Figs 1-2, the third radial portion 105' can be designed as a split tongue.

With reference to Fig 6, a roller wheel 1' can be formed in a similar way as the roller wheel shown in Fig 2. The roller wheel 1' can replace one or more of the roller wheels in Figs 3-4.

The roller wheel 1' is formed by a plurality of, here four, roller segments as described with reference to Fig 5 being joined together so that the outer portion 103' of each roller segment overlaps the central portion 101' of adjacent segments.

Precisely as described with reference to Figs 1-2, the first radial portion 102' of the roller segments 10'a, 10'b, 10'c, 10'd is joined to the second radial portion 104'.

One difference is that a stop part 109 can be arranged to project out from the outward facing surface of the first radial portion 102' of each roller segment 10'b, so that incurvation of the third radial portion 105' of the overlapping roller segment 10'a is limited through the end surface of the third radial portion 105' coming into contact with the stop part 109.

The stop part 109 can be designed as a part of the coupling part that connects the roller segments 10'a, 10'b. For example, the stop part can be designed as a washer or a blank with a through-hole for fastening elements that are arranged on the coupling parts 106, 107.

## Claims

1. A roller segment (10, 10', 10a, 10b, 10c, 10d) for forming a roller wheel (1) rotatable about an axis of rotation for an agricultural implement, comprising:
a central portion (101, 101'), which is adapted for attaching to an axle (11),
a first radial portion (102, 102'), which extends radially outward from a first end of the central portion (101, 101'), and
a curved outer portion (103, 103'), which extends from a radially outer portion of the first radial portion (102, 102'),
**characterized by**
a second radial portion (104, 104'), which extends radially outward from a second end of the central portion (101, 101'),
the first radial portion (102, 102') having a first coupling part (106), and
the second radial portion (104, 104') having a second coupling part (107), which is located at the same radial distance from the outer portion (103, 103') as the first coupling part (106),
wherein the central portion (101), the first radial portion (102), the outer portion (103) and the second radial portion (104) of the roller segment (10, 10a, 10b, 10c, 10d) are formed in one piece from material which is substantially strip-shaped, preferably steel.

2. The roller segment according to claim 1, wherein the outer portion (103, 103') and the central portion (101) extend substantially concentrically to each other, and wherein the outer portion is longer than the central portion.

3. The roller segment according to claim 1 or 2, wherein, viewed in a cross section across the axis of rotation, the central portion (101, 101') is curved or straight.

4. The roller segment according to any one of the preceding claims, further comprising a third radial portion (105), which extends inward from the free end of the outer portion (103) to a free end of the second radial portion (104).

5. The roller segment according to claim 4, wherein a radially inner portion of the third radial portion (105), viewed in a radial direction, overlaps a radially outer portion of the second radial portion (104).

6. The roller segment according to claim 5, wherein one of the radially inner portion of the third radial portion (105) and the radially outer portion of the second radial portion (104), viewed in an axial direction, at least partly surrounds the second of the radially inner portion of the third radial portion and the radially outer portion of the second radial portion.

7. The roller segment according to any one of the preceding claims, wherein the outer portion (103), viewed in a radial direction, substantially overlaps the central portion (101).

8. The roller segment according to any one of claims 1-3, wherein the radial overlap is substantially absent between the outer portion (103') and the central portion (101').

9. The roller segment according to any one of the preceding claims, wherein said coupling parts (106, 107) comprise at least a respective recess, slot or through-hole, in which fastening elements are insertable.

10. The roller segment according to any one of the preceding claims, wherein the central portion comprises a third coupling part (108) for connecting to the axle.

11. A roller wheel (1) for an agricultural implement, formed by at least two roller segments (10a, 10b, 10c, 10d; 10'a, 10'b, 10'c, 10'd) according to any one of the preceding claims, a first of the second coupling part (107) of the roller segments (10a) being connected to a second of the first coupling part (106) of the roller segments (10b).

12. A roller wheel (1) for an agricultural implement, formed by at least two roller segments (10a, 10b, 10c, 10d; 10'a, 10'b, 10'c, 10'd) according to any one of claims 1 -10 a first of the second radial portions (104a) of the roller segments (10a) being connected to a second of the first radial portion (102b) of the roller segments (10b).

13. A roller for an agricultural implement, comprising an axle (11) and at least two roller wheels according to claim11 or 12, which are attached to axially separated portions of the axle.

14. An agricultural implement for tillage, comprising a roller according to claim 13.

15. A method for forming a roller wheel for an agricultural implement, comprising:
providing at least two roller segments (10, 10a, 10b, 10c, 10d; 10'a, 10'b, 10'c, 10'd) according to any one of claims 1-10,
positioning the roller segments with respective central portion (103) against an axle (11),
positioning the roller segments so that a first of the second radial portion (104a) of the roller segments (10a) extends parallel to, and contacts, a second of the first radial portions (102b) of the roller segments (10b), and
connecting a second coupling part (107) associated with the second radial portion (104a) of the first roller segment to a first coupling part (106) associated with the first radial portion (102b) of the second roller segment.

## Patentansprüche

1. Walzensegment (10, 10', 10a, 10b, 10c, 10d) zum Bilden eines Walzenrads (1), das um eine Drehachse drehbar ist, für ein landwirtschaftliches Gerät, umfassend:
einen mittigen Abschnitt (101, 101'), der zum Anbringen an eine Achse (11) ausgelegt ist,
einen ersten radialen Abschnitt (102, 102'), der sich von einem ersten Ende des mittigen Abschnitts (101, 101') radial nach außen erstreckt, und
einen gekrümmten äußeren Abschnitt (103, 103'), der sich von einem radial äußeren Abschnitt des ersten radialen Abschnitts (102, 102') erstreckt,
**gekennzeichnet durch**
einen zweiten radialen Abschnitt (104, 104'), der sich von einem zweiten Ende des mittigen Abschnitts (101, 101') radial nach außen erstreckt,
den ersten radialen Abschnitt (102, 102'), der ein erstes Kopplungsteil (106) aufweist, und
den zweiten radialen Abschnitt (104, 104'), der ein zweites Kopplungsteil (107) aufweist, welcher sich in dem gleichen radialen Abstand von dem äußeren Abschnitt (103, 103') wie das erste Kopplungsteil (106) befindet,
wobei der mittige Abschnitt (101), der erste radiale Abschnitt (102), der äußere Abschnitt (103) und der zweite radiale Abschnitt (104) des Walzensegments (10, 10a, 10b, 10c, 10d) in einem Stück aus Material, das im Wesentlichen streifenförmig ist, vorzugsweise Stahl, gebildet sind.

2. Walzensegment nach Anspruch 1, wobei sich der äußere Abschnitt (103, 103') und der mittige Abschnitt (101) im Wesentlichen konzentrisch zueinander erstrecken und wobei der äußere Abschnitt länger ist als der mittige Abschnitt.

3. Walzensegment nach Anspruch 1 oder 2, wobei, in einem Querschnitt über die Drehachse betrachtet, der mittige Abschnitt (101, 101') gekrümmt oder gerade ist.

4. Walzensegment nach einem der vorhergehenden Ansprüche, ferner umfassend einen dritten radialen Abschnitt (105), der sich von dem freien Ende des äußeren Abschnitts (103) zu einem freien Ende des zweiten radialen Abschnitts (104) nach innen erstreckt.

5. Walzensegment nach Anspruch 4, wobei ein radial innerer Abschnitt des dritten radialen Abschnitts (105), in einer radialen Richtung betrachtet, einen radial äußeren Abschnitt des zweiten radialen Abschnitts (104) überlappt.

6. Walzensegment nach Anspruch 5, wobei einer von dem radial inneren Abschnitt des dritten radialen Abschnitts (105) und dem radial äußeren Abschnitt des zweiten radialen Abschnitts (104), in einer axialen Richtung betrachtet, den zweiten von dem radial inneren Abschnitt des dritten radialen Abschnitts und dem radial äußeren Abschnitt des zweiten radialen Abschnitts zumindest teilweise umgibt.

7. Walzensegment nach einem der vorhergehenden Ansprüche, wobei der äußere Abschnitt (103), in einer radialen Richtung betrachtet, den mittigen Abschnitt (101) im Wesentlichen überlappt.

8. Walzensegment nach einem der Ansprüche 1-3, wobei die radiale Überlappung zwischen dem äußeren Abschnitt (103') und dem mittigen Abschnitt (101') im Wesentlichen nicht vorhanden ist.

9. Walzensegment nach einem der vorhergehenden Ansprüche, wobei die Kopplungsteile (106, 107) mindestens eine jeweilige Vertiefung, einen jeweiligen Schlitz oder ein jeweiliges Durchgangsloch umfassen, in welchen Befestigungselemente einsetzbar sind.

10. Walzensegment nach einem der vorhergehenden Ansprüche, wobei der mittige Abschnitt ein drittes Kopplungsteil (108) zum Verbinden mit der Achse umfasst.

11. Walzenrad (1) für ein landwirtschaftliches Gerät, das durch mindestens zwei Walzensegmente (10a, 10b, 10c, 10d; 10'a, 10'b, 10'c, 10'd) nach einem der vorhergehenden Ansprüche gebildet ist, wobei ein erstes von dem zweiten Kopplungsteil (107) der Walzensegmente (10a) mit einem zweiten von dem ersten Kopplungsteil (106) der Walzensegmente (10b) verbunden ist.

12. Walzenrad (1) für ein landwirtschaftliches Gerät, das durch mindestens zwei Walzensegmente (10a, 10b, 10c, 10d; 10'a, 10'b, 10'c, 10'd) nach einem der Ansprüche 1-10 gebildet ist, wobei ein erstes von den zweiten radialen Abschnitten (104a) der Walzensegmente (10a) mit einem zweiten von dem ersten radialen Abschnitt (102b) der Walzensegmente (10b) verbunden ist.

13. Walze für ein landwirtschaftliches Gerät, umfassend eine Achse (11) und mindestens zwei Walzenräder nach Anspruch 11 oder 12, welche an axial getrennten Abschnitten der Achse angebracht sind.

14. Landwirtschaftliches Gerät zur Bodenbearbeitung, umfassend eine Walze nach Anspruch 13.

15. Verfahren zum Bilden eines Walzenrads für ein landwirtschaftliches Gerät, umfassend:
Vorsehen von mindestens zwei Walzensegmenten (10, 10a, 10b, 10c, 10d; 10'a, 10'b, 10'c, 10'd) nach einem der Ansprüche 1-10,
Positionieren der Walzensegmente mit einem jeweiligen mittigen Abschnitt (103) gegen eine Achse (11),
Positionieren der Walzensegmente derart, dass sich ein erster von dem zweiten radialen Abschnitt (104a) der Walzensegmente (10a) parallel zu einem zweiten von den ersten radialen Abschnitten (102b) der Walzensegmente (10b) erstreckt und diesen berührt, und
Verbinden eines zweiten Kopplungsteils (107), das dem zweiten radialen Abschnitt (104a) des ersten Walzensegments zugeordnet ist, mit einem ersten Kopplungsteil (106), das dem ersten radialen Abschnitt (102b) des zweiten Walzensegments zugeordnet ist.

## Revendications

1. Segment de rouleau (10, 10', 10a, 10b, 10c, 10d) pour le formage d'une roue de rouleau (1) pouvant tourner autour d'un axe de rotation pour outil agricole, comprenant :
une section centrale (101,101') qui est apte à être rattachée à un essieu (11),
une première section radiale (102,102') qui s'étend radialement vers l'extérieur depuis une première extrémité de la section centrale (101,101'), et
une section extérieure courbée (103,103') qui s'étend depuis une section radialement extérieure de la première section radiale (102,102'),
**caractérisé par**
une deuxième section radiale (104,104') qui s'étend radialement vers l'extérieur depuis une seconde extrémité de la section centrale (101,101'),
la première section radiale (102,102') comportant une première pièce de couplage (106), et
la deuxième section radiale (104,104') comportant une deuxième pièce de couplage (107) qui se trouve à la même distance radiale de la section extérieure (103,103') que la première pièce de couplage (106),
la section centrale (101), la première section radiale (102), la section extérieure (103) et la deuxième section radiale (104) du segment de rouleau (10, 10a, 10b, 10c, 10d) étant formées en une pièce dans un matériau qui est substantiellement en forme de bande, de préférence de l'acier.

2. Segment de rouleau selon la revendication 1, dans lequel la section extérieure (103,103') et la section centrale (101) s'étendent substantiellement concentriquement l'une par rapport à l'autre, et la section extérieure est plus longue que la section centrale.

3. Segment de rouleau selon la revendication 1 ou 2, dans lequel, vue en section transversale en travers de l'axe de rotation, la section centrale (101,101') est courbée ou droite.

4. Segment de rouleau selon l'une quelconque des revendications précédentes, comprenant en outre une troisième section radiale (105), qui s'étend vers l'intérieur depuis l'extrémité libre de la section extérieure (103) jusqu'à une extrémité libre de la deuxième section radiale (104).

5. Segment de rouleau selon la revendication 4, dans lequel une section radialement intérieure de la troisième section radiale (105), vue dans un sens radial, chevauche une section radialement extérieure de la deuxième section radiale (104).

6. Segment de rouleau selon la revendication 5, dans lequel une parmi la section radialement intérieure de la troisième section radiale (105) et la section radialement extérieure de la deuxième section radiale (104), vue dans un sens axial, entoure au moins partiellement la seconde parmi la section radialement intérieure de la troisième section radiale et la section radialement extérieure de la deuxième section radiale.

7. Segment de rouleau selon l'une quelconque des revendications précédentes, dans lequel la section extérieure (103), vue dans un sens radial, chevauche substantiellement la section centrale (101).

8. Segment de rouleau selon l'une quelconque des revendications 1 à 3, dans lequel le chevauchement radial est substantiellement absent entre la section extérieure (103') et la section centrale (101 ').

9. Segment de rouleau selon l'une quelconque des revendications précédentes, dans lequel lesdites pièces de couplage (106,107) comprennent au moins un retrait, une fente ou un trou traversant respectif dans lequel des éléments de fixation sont insérables.

10. Segment de rouleau selon l'une quelconque des revendications précédentes, dans lequel la section centrale comprend une troisième pièce de couplage (108) destinée à se connecter à l'essieu.

11. Roue à rouleau (1) pour outil agricole, formée par au moins deux segments de rouleau (10a, 10b, 10c, 10d ; 10'a, 10'b, 10'c, 10'd) selon l'une quelconque des revendications précédentes, une première des deuxièmes pièces de couplage (107) des segments de rouleau (10a) étant connectée à une seconde des premières pièces de couplage (106) des segments de rouleau (10b).

12. Roue à rouleau (1) pour outil agricole, formée par au moins deux segments de rouleau (10a, 10b, 10c, 10d ; 10'a, 10'b, 10'c, 10'd) selon l'une quelconque des revendications 1 à 10, une première des deuxièmes sections radiales (104a) des segments de rouleau (10a) étant connectée à une seconde des premières sections radiales (102b) des segments de rouleau (10b).

13. Rouleau pour outil agricole, comprenant un essieu (11) et au moins deux roues à rouleau selon la revendication 11 ou 12, qui sont fixées à des sections axialement séparées de l'essieu.

14. Outil agricole de labour, comprenant un rouleau selon la revendication 13.

15. Procédé de formage d'une roue à rouleau pour outil agricole, comprenant :
la prévision d'au moins deux segments de rouleau (10a, 10b, 10c, 10d ; 10'a, 10'b, 10'c, 10'd) selon l'une quelconque des revendications 1 à 10,
le positionnement des segments de rouleau avec leur section centrale respective (103) contre un essieu (11),
le positionnement des segments de rouleau de manière à ce qu'une première des deuxièmes sections radiales (104a) des segments de rouleau (10a) s'étende parallèlement à et vienne en contact avec une seconde des premières sections radiales (102b) des segments de rouleau (10b), et
la connexion d'une deuxième pièce de couplage (107) associée à la deuxième section radiale (104a) du premier segment de rouleau à une première pièce de couplage (106) associée à la première section radiale (102b) du deuxième segment de rouleau.
